(19) Europäisches Patentamt
European Patent Office
Office européen des brevets

(11) **EP 4 296 771 B1**

(12) **EUROPÄISCHE PATENTSCHRIFT**

(45) Veröffentlichungstag und Bekanntmachung des Hinweises auf die Patenterteilung:
**29.05.2024 Patentblatt 2024/22**

(21) Anmeldenummer: **22180971.8**

(22) Anmeldetag: **24.06.2022**

(51) Internationale Patentklassifikation (IPC):
**G03B 3/04** (2021.01)        **G03B 3/10** (2021.01)
**H04N 23/54** (2023.01)

(52) Gemeinsame Patentklassifikation (CPC):
**G03B 3/04; G03B 3/10; H04N 23/54;**
G03B 2205/0084

(54) **OPTOELEKTRONISCHER SENSOR UND VERFAHREN ZUR FOKUSVERSTELLUNG**

OPTO-ELECTRONIC SENSOR AND FOCUS DISPLACEMENT METHOD

CAPTEUR OPTOÉLECTRONIQUE ET PROCÉDÉ DE RÉGLAGE DU POINT FOCAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.12.2023 Patentblatt 2023/52**

(73) Patentinhaber: **SICK AG**
**79183 Waldkirch (DE)**

(72) Erfinder:
• **Pfrengle, Thomas**
**79258 Hartheim (DE)**
• **Burger, Jakob**
**77955 Ettenheim (DE)**

(56) Entgegenhaltungen:
EP-A1- 3 663 846        US-A- 5 969 760
US-A1- 2008 062 301     US-A1- 2010 283 887
US-A1- 2015 070 565     US-A1- 2021 080 807

## Beschreibung

Die Erfindung betrifft einen optoelektronischen Sensor, insbesondere eine Kamera, und ein Verfahren zur Fokusverstellung eines optoelektronischen Sensors nach dem Oberbegriff von Anspruch 1 beziehungsweise 13.

Kameras werden unter anderem in industriellen Anwendungen in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Trotz dieser größeren Vielfalt bei kamerabasierten Codelesern sind weiterhin verbreitet die spezialisierten, dafür in der Regel bei gleicher Leseleistung preiswerteren Barcodescanner im Einsatz. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage eines Codelesers oder einer Kamera für Inspektions- oder Vermessungsaufgaben über einem Förderband. Die Kamera nimmt während der Relativbewegung des Objektstroms auf dem Förderband Bilder auf und speichert die erfassten Informationen beziehungsweise leitet in Abhängigkeit der gewonnenen Objekteigenschaften weitere Bearbeitungsschritte ein. Solche Bearbeitungsschritte können in der an das konkrete Objekt angepassten Weiterverarbeitung an einer Maschine bestehen, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Von einem Codeleser werden die Objekte für eine korrekte Sortierung oder ähnliche Bearbeitungsschritte anhand der angebrachten Codes identifiziert.

Um mit verschiedenen Arbeitsabständen umzugehen und insbesondere Codes in unterschiedlichen Abständen lesen zu können, muss die Fokusposition eingestellt werden. Häufig wird das mit einem Autofokus verbunden, bei dem der Abstand zu dem aufzunehmenden Objekt bestimmt und die Fokuslage entsprechend eingestellt wird. Für die Fokusverstellung sind unterschiedliche Technologien bekannt. Typischerweise wird die Position des Objektivs und dadurch die Bildschnittweite verändert, um eine Umfokussierung zu erzielen.

So schlägt die EP 2 498 113 A1 für einen kamerabasierten Codeleser eine Fokusverstellung mit Hilfe einer motorgetriebenen Kurvenscheibe und einer Parallelführung des Objektivs in einer Federlagerung vor, die mehrere flache Blattfedern aufweist. Nachteilig hieran ist der mechanische Verschleiß, der mit dem Gewicht des Objektivs noch zunimmt. Das beschränkt die Auswahl der Objektive auf kleinere Objektive. Ein größeres Objektiv bringt nicht nur mehr Verschleiß, sondern bedarf auch einer Anpassung der Mechanik, so dass die Variantenbildung aufwändig ist.

In der US2016/0178923 A1 wird ein Autofokus-Linsenhalter zwischen zwei Blattfedern gehalten, die eine zentrale Öffnung für den längs der optischen Achse beweglichen Linsenhalter aufweisen. Diese Fokusverstellung bringt hinsichtlich der Gewichtspragmatik keine Verbesserung, sie hat erst recht einen komplexen und baugroßen Aufbau.

Die EP 757 270 B1 befasst sich mit einer Autofokusvorrichtung, bei der sich ein Linsenträger mit Linsen elastisch axial in einer mechanischen Führung aus zwei Blattfederblenden bewegt, die parallel zueinander und senkrecht zur optischen Achse der Linsen angeordnet sind. Die Führungs- und Kraftverteilungseigenschaften dieser Anordnung erreichen aber nicht diejenigen einer Parallelführung wie in EP 2 498 113 A1.

Um den Verschleiß zu reduzieren, kann als Aktorik eine Tauchspule (Voice Coil) eingesetzt werden. Tauchspulen werden beispielsweise in Spiegelreflexkameras zur Bildstabilisierung verwendet. Die DE 10 2016 112 123 A1 offenbart einen Barcodescanner mit einer Sendeoptik auf einem Schwenkarm, der zum Fokussieren des Lesestrahls mit einer Tauchspulaktorik verschwenkt wird. Das ist so zunächst nur für eine wenig komplexe Sendeoptik geeignet und nicht für ein Empfangsobjektiv. Zudem kommt es durch die Kreisbewegung des Schwenkarms zu einem Versatz zwischen Sendeoptik und Lichtsender, und dieser Versatz würde, auf einen Empfangspfad übertragen, zu erheblichen optischen Einbußen führen.

In der EP 3 525 026 A1 wird eine Fokusverstellung beschrieben, die das Objektiv zwischen zwei gerollten Blattfedern bewegt. Die EP 3 663 846 A1 offenbart eine Objektivaufhängung mit zwei rahmenförmigen Federelementen. In beiden Fällen ist eine Tauchspule als Aktorik vorgesehen. Dadurch wird jeweils die Lebensdauer verbessert, weil eine verschleißanfällige Kurvenscheibe oder ein vergleichbares mechanisches Übertragungselement entfällt. Soll jedoch ein anderes Objektiv mit höherer Masse eingesetzt werden, so muss die Aktorik mit der Tauchspule neu ausgelegt werden. Objektivvarianten sind damit weiterhin unwirtschaftlich.

Um nicht Objektive größerer oder jedenfalls unterschiedlicher Objektivmassen bewegen zu müssen, gibt es im Stand der Technik den Gedanken, stattdessen den Bildsensor zu bewegen. Die EP 1 513 094 B1 beschreibt einen Codeleser, bei dem der Lichtempfänger auf einem Schwenkarm angeordnet ist, durch dessen Bewegung sich der Abstand zu einer lagefesten Empfangsoptik verändert, um die Fokuslage einzustellen. Dabei verändert sich jedoch nicht nur die Bildschnittweite, sondern auch die optische Achse des Lichtempfängers gegenüber der Empfangsoptik, so dass jede Fokusverstellung zu unterschiedlichen Abbildungsfehlern führt. Die EP 1 698 996 B1 variiert das Konzept dahingehend, dass der Bildsensor nicht auf dem Schwenkarm selbst, sondern einem daran gekoppelten Federarm untergebracht wird. Dadurch ändert der Bildsensor bei Fokusverstellungen seine Orientierung, und dadurch werden die Abbildungsfehler teilweise, jedoch nicht vollständig vermieden.

Die EP 2 112 540 A1 ordnet die Empfangsoptik auf einer Schwinge an. Dadurch verschiebt sich der Erfassungsbereich bei Veränderung der Fokuslage. In der beschränkten Anwendung der EP 2 112 540 A1 mit linienförmiger Erfassung kann diese Verschiebung parallel zu dieser linienförmigen Erfassung ausgerichtet werden und stört dann im Endeffekt nicht. Das ist aber auf allgemeine Kameras und deren Anwendungen nicht übertragbar. Es wird noch abschließend erwähnt, statt der Empfangsoptik den Lichtempfänger mit einer Schwinge beweglich anzuordnen, ohne dies näher auszuführen.

Die US 7 419 467 offenbart eine medizinische Untersuchungsvorrichtung mit einem Autofokusmodul, das den Bildsensor relativ zu der Linse bewegt. Die US 2014/0093228 A1 erwähnt beide Möglichkeiten, mit einem Fokusmotor die Fokuslinse oder den Sensorbereich zu bewegen. In der US 5 101 278 wird eine Autofokusvorrichtung für eine Videokamera vorgestellt und einleitend diskutiert, dass für mehr Kompaktheit statt der Linsengruppe der Bildsensor bewegt werden kann. Die US 5 245 172 befasst sich mit einem auf einer Tauchspule basierenden Fokussystem, bei dem der Bildempfänger auf einem dreh- und kippbaren Rahmen angeordnet ist. Über tiefere mechanische oder optische Konsequenzen wird dabei jeweils nicht nachgedacht.

Die US 2015/0070565 A1 offenbart eine Kamera mit einem Bildsensor, der mit einer Aktorik auf der optischen Achse der Linse bewegt wird. Dafür wird ein paralleler Verbindungsmechanismus mit zwei Blattfedern eingesetzt.

In der US 2008/0062301 A1 wird ein Autofokusmechanismus vorgestellt, bei dem eine Leiterplatte des Bildsensors zwischen mehreren flexiblen Leiterplatten eingespannt ist, so dass der Bildsensor mittels elektromagnetischer Kraft längs der optischen Achse bewegt werden kann.

Aus der US 5 969 760 ist eine weitere Kamera bekannt, die Fokusverstellungen durch Bewegen des Bildsensors längs der optischen Achse bewirkt.

Die US 2010/0283887 A1 setzt in ihrer Fokusverstellung zur Bewegung einer Linse unter anderem ein Vorspannelement und ein Halteelement ein, die beide aus Stahl oder Beryllium-Kupfer hergestellt sein können.

Die US 2021/0080807 A1 befasst sich mit einem Autofokus mittels Tauchspulaktorik zur Bewegung eines Bildsensors.

Im Stand der Technik sind weiterhin Linsen mit veränderlicher Brennweite, insbesondere Flüssiglinsen bekannt, die ganz ohne makroskopische Verschiebung von Bauelementen auskommen. Flüssiglinsen sind längst nicht frei für alle Objektivserien im Markt verfügbar. Beschränkt man sich auf verfügbare Flüssiglinsen kleiner Apertur, so ist der Einsatz in größeren Objektiven nicht möglich. Unabhängig von der Verfügbarkeit der Flüssiglinsen sind aufwändige Temperaturkompensationen erforderlich, und für Anwendungen bei tiefen Temperaturen sind Flüssiglinsen insgesamt ungeeignet. Da eine Flüssiglinse typischerweise das Objektiv nicht ersetzt, sondern ergänzt, ist im Design zusätzlicher Bauraum für die Flüssiglinse vorzusehen. Bei der Variantenbildung sind individuelle Anpassungen für das jeweilige Objektiv und die dazu passende Flüssiglinse erforderlich.

Zusammenfassend bietet der Stand der Technik trotz der vielfältigen Ansätze bislang nur unzureichende Möglichkeiten für eine Fokusverstellung, die eine Vielzahl insbesondere auch größerer und schwererer Objektive unterstützt.

Es ist daher Aufgabe der Erfindung, die Fokusverstellung eines optoelektronischen Sensors weiter zu verbessern.

Diese Aufgabe wird durch einen optoelektronischen Sensor und ein Verfahren zur Fokusverstellung eines optoelektronischen Sensors nach Anspruch 1 beziehungsweise 13 gelöst. Der Sensor weist einen Lichtempfänger auf, vorzugsweise in Form eines zeilen- oder matrixförmigen Bildsensors, womit der Sensor zu einer Kamera wird. Eine zugehörige Empfangsoptik beziehungsweise ein Empfangsobjektiv sorgt für eine scharfe Aufnahme. Für Umfokussierungen bewegt eine Fokusverstelleinheit mit einem Aktor den Lichtempfänger. Die Bewegung verändert die Bildschnittweite und damit die Fokuslage. Es wird folglich nicht wie sonst allgemein üblich die Empfangsoptik bewegt, sondern der Lichtempfänger beziehungsweise eine Leiterplatte mit dem Lichtempfänger. Die Empfangsoptik oder mindestens ein Element davon kann zusätzlich bewegt werden, vorzugsweise jedoch bewegt sich nur der Lichtempfänger relativ zu der Empfangsoptik, und die Empfangsoptik bleibt unbewegt. Bewegung ist hier immer im Bezugssystem der Kamera gemeint. Die Kamera als Ganzes könnte sich ebenfalls insbesondere in mobilen Anwendungen bewegen, das ändert aber nichts an der Fokuseinstellung.

Die Erfindung geht von dem Grundgedanken aus, den Lichtempfänger in gleichbleibender Orientierung auf der optischen Achse der Empfangsoptik zu bewegen, d.h. als Bewegung eine Parallelverschiebung vorzunehmen. Der Lichtempfänger wird somit nicht verkippt und nicht in unterschiedliche Schräglagen gebracht. Die gleichbleibende Orientierung hält vorzugsweise die Ebene des Lichtempfängers stets senkrecht zur optischen Achse. Vorzugsweise bleibt auch die laterale Positionierung erhalten, der Durchstoßpunkt der optischen Achse auf dem Lichtempfänger verändert sich dann durch die Bewegung nicht. Erreicht wird die gleichbleibende Orientierung durch eine Parallelführung der Fokusverstelleinheit mit mindestens einem flexiblen Halteelement. Die Parallelverschiebung ist nicht im mathematisch perfekten, sondern in einem praktischen Sinne gemeint. Geringfügige Verkippungen und laterale Verschiebungen im Rahmen von Toleranzen und dergleichen bleiben möglich, solange die entsprechenden optischen Veränderungen und Fehler hinnehmbar sind.

Die Erfindung hat den Vorteil, dass mit dem Lichtempfänger nur noch eine gegenüber Objektiven vergleichsweise kleine Masse bewegt werden muss. Dadurch wird der Verschleiß minimiert, je nach Aktor sogar weitgehend eliminiert, und damit die Lebensdauer verlängert. Dadurch wird eine Anpassung oder Neuauslegung der Fokusverstelleinheit überflüssig, dasselbe Fokusmodul kann für verschiedene Geräteklassen und sehr viele Objektivvarianten eingesetzt werden. Im Gegensatz zu den höchst unterschiedlichen Gewichten von Objektiven verändert selbst ein Wechsel des Lichtempfängers das Gewicht kaum nennenswert, zumal Bildsensoren mit unterschiedlicher Pixelauflösung häufig Pin-kompatibel im gleichen Package vertrieben werden. Die Konstanz der konstruktiv-mechanischen Plattform für die Fokusverstellung senkt die Entwicklungs- und Herstellkosten und erhöht die Variantenvielfalt. Standardisiert sind lediglich der Objektivflansch und der Abstand zur optischen Fläche. Somit sind praktisch beliebige Objektive mit unterschiedlichsten Brennweiten, Blenden und sonstigen optischen Eigenschaften kombinierbar, und dies nicht nur auf Seiten des Herstellers des Sensors, sondern sogar noch kundenseitig, wobei die diversen Objektive frei im Markt beschafft oder als Zubehörteil angeboten werden können. Je nach Anforderungen können also besonders hochwertige oder umgekehrt kostengünstigere, aber völlig ausreichende Objektive verwendet werden. Die mit Flüssiglinsen verbundenen Nachteile sind ebenfalls überwunden, und es bestehen keine Abhängigkeiten von Flüssiglinsenherstellern oder speziellen, für die Zusammenarbeit mit einer bestimmten Flüssiglinse entworfenen Objektiven.

Der Aktor weist bevorzugt einen Schrittmotor oder eine Tauchspule auf. Ein Schrittmotor ist ein bewährtes und leicht verfügbares Bauteil. Eine Tauchspulaktorik (Voice Coil) hat den Vorteil, dass kein oder zumindest weniger mechanischer Verschleiß auftritt, weil die Kraftübertragung kontaktlos bleibt. Wahlweise können die Spule ortsfest und der Magnet bewegt angeordnet sein oder umgekehrt. Spule beziehungsweise Magnet können für eine besonders kompakte Anordnung auf einer Leiterplatte des Lichtempfängers integriert werden.

Der Sensor weist bevorzugt einen Positionssensor zur Bestimmung der Position des Aktors, der Parallelführung oder des Lichtempfängers auf. Als Positionssensor kann beispielsweise ein Hallsensor eingesetzt sein. Es wird je nach Ausführungsform die Stellung des Aktors, der Parallelführung oder des Lichtempfängers gemessen, dies alles hängt in bekannter Weise miteinander zusammen und liefert daher letztlich dieselbe Messinformation, nämlich eine Rückmeldung über die eingestellte Fokuslage. Im Zusammenspiel mit einer Abstandsmessung oder Bildschärfebestimmung kann so eine Fokusregelung beziehungsweise ein Autofokus realisiert werden.

Der Lichtempfänger ist bevorzugt auf einer Leiterplatte angeordnet, die mindestens einen flexiblen Teilbereich aufweist. Die Leiterplatte ist somit eine Flexplatine. Die Flexibilität ermöglicht es, die Leiterplatte und damit den Lichtempfänger in den verschiedenen Positionen der Bewegung mit den übrigen elektronischen Komponenten des Sensors verbunden zu halten.

Die Leiterplatte weist bevorzugt zumindest in dem flexiblen Teilbereich gewalztes Kupfer auf. Dadurch wird eine mechanische Stabilität des mindestens einen flexiblen Teilbereichs erreicht, der die vielen Tausende oder gar Millionen von Verbiegungen im Rahmen der Fokusverstellungen über die Lebensdauer des Sensors aushält.

Die Parallelführung weist bevorzugt eine feststehende erste Lagerung und eine gegenüberliegende bewegliche zweite Lagerung auf, wobei das flexible Halteelement mit einer ersten Seite in der ersten Lagerung und mit einer gegenüberliegenden zweiten Seite in der zweiten Lagerung gelagert ist. Das flexible Halteelement ist somit auf einer Seite fest oder stationär gelagert und wird auf der anderen Seite zur Fokusverstellung von dem Aktor auf und ab bewegt.

Der Lichtempfänger ist bevorzugt mindestens mittelbar starr mit der zweiten Lagerung und flexibel oder gar nicht mit der ersten Lagerung verbunden. Mindestens mittelbar bedeutet insbesondere, dass es nicht der Lichtempfänger selbst, sondern dessen Leiterplatte ist, die verbunden ist. Die Verbindung zu der beweglichen zweiten Lagerung ist starr, d.h. der Lichtempfänger vollzieht die Bewegungen des flexiblen Halteelements auf deren Seite mit und wird hier von dem Aktor zur Fokusverstellung gehoben und gesenkt. An der gegenüberliegenden feststehenden ersten Lagerung sorgt entweder eine flexible Verbindung des Lichtempfängers für ausreichend Spiel, um dessen starre Bewegung beziehungsweise Parallelverschiebung zuzulassen, oder es gibt hier gar keine Verbindung, um die Bewegung nicht einzuschränken. Diese Eigenschaften betreffen die mechanische Anbindung. Die elektrische Anbindung erfolgt vorzugsweise über einen flexiblen Teilbereich einer Leiterplatte, der die flexible Verbindung mit der ersten Lagerung herstellen kann. Alternativ oder zusätzlich kann ein flexibler Teilbereich mit elektronischer Kontaktierung jenseits der zweiten Lagerung vorgesehen sein.

Das mindestens eine flexible Halteelement ist bevorzugt als Rahmen um den Lichtempfänger beziehungsweise dessen Leiterplatte ausgebildet. Das ist aus einer Draufsicht auf den Lichtempfänger zu verstehen, der in dieser Perspektive von dem flexiblen Halteelement eingerahmt wird. Mit den Fokusverstellungen verbiegt sich der Rahmen, dadurch wird der Lichtempfänger parallelverschoben und dadurch möglicherweise zumindest teilweise in zu dem Lichtempfänger vertikaler Richtung, längs der optischen Achse, aus dem Rahmen verschoben.

Das mindestens eine flexible Halteelement weist bevorzugt mindestens eine Blattfeder auf. Das ist ein kostengünstiges und einfach in passender Form herstellbares Bauteil, das trotzdem alle Anforderungen erfüllt. Alternativ wären beispielsweise auch Passstifte in gefederten Lagerbuchsen vorstellbar.

Die Parallelführung weist bevorzugt zwei flexible Halteelemente auf, wobei der Lichtempfänger zwischen den beiden flexiblen Halteelementen angeordnet ist. Der Lichtempfänger ist somit in zu dem Lichtempfänger vertikaler Richtung, längs der optischen Achse von je einem flexiblen Halteelement oben und unten eingerahmt. Das ermöglicht eine besonders einfache und robuste Realisierung der Parallelführung.

Das mindestens eine flexible Halteelement weist bevorzugt ein wärmeleitfähiges Metall auf, insbesondere Kupfer oder eine Kupfer-Beryllium-Legierung. Die Wärmeableitung der Aktorik, der bewegten Teile und des Lichtempfängers stellt besondere Herausforderungen. Durch hoch wärmeleitfähiges Metall wie Kupfer oder eine Kupfer-Beryllium-Legierung kann diese Problematik jedenfalls teilweise entschärft werden.

Das mindestens eine flexible Halteelement weist bevorzugt mindestens einen starren Bereich auf, in dem das Material verdickt ist, insbesondere mittels mindestens eines zusätzlichen Metallstreifens. Das flexible Halteelement verbiegt sich somit nicht über die volle Länge, sondern nur in mindestens einem Biegebereich. Entsprechend gibt es einen starren Bereich, in dem das Material verdickt werden kann, ohne die erforderlichen Biegeeigenschaften zu beeinträchtigen. Somit wird die Wärmeleitung jedenfalls über den Teil der Strecke des starren Bereichs verbessert. Das zusätzliche Material verbessert die Wärmeleitung auch dann, wenn es an sich keine herausragenden Wärmeleitungseigenschaften aufweist, wie beispielsweise kostengünstiges Aluminium. Besonders bevorzugt wird Material hoher Wärmeleitfähigkeit eingesetzt, wie Kupfer oder eine Kupfer-Beryllium-Legierung. Konstruktiv besonders einfach wird eine Verdickung durch Anbringen mindestens eines Metallstreifens, beispielsweise zweier Metallstreifen von oben und unten erreicht.

Das mindestens eine flexible Halteelement weist eine zusätzliche Wärmeleitschicht auf. In einer erfindungsgemäßen Alternative ist die Wärmeleitschicht als Graphitfolie ausgebildet. In den Biegebereichen ist ein Verdicken des Materials nicht möglich, ohne die Biegeeigenschaften zu beeinträchtigen oder gar zu verlieren. Eine dünne Wärmeleitschicht schafft hier Abhilfe, und dafür als besonders geeignet hat sich eine Graphitfolie erwiesen. Wirklich benötigt wird die dünne Wärmeleitschicht nur in den Biegebereichen, sie kann aber ebenfalls in dem starren Bereich oder überall in dem flexiblen Halteelement vorgesehen sein, wodurch sich auch die Herstellung vereinfacht.

Das mindestens eine flexible Halteelement weist in einer weiteren erfindungsgemäßen Alternative zwei Metallschichten mit der Wärmeleitschicht dazwischen auf. Die Wärmeleitschicht befindet sich somit in der Mitte, vorzugsweise in der Lage der sogenannten neutralen Faser, um bei einem Verbiegen des flexiblen Halteelements möglichst geringen Kräften ausgesetzt zu sein. Andernfalls, etwa bei einer äußeren Wärmeleitschicht, besteht die Gefahr, dass die Wärmeleitschicht, insbesondere eine dünne Graphitfolie, aufgrund der Fokusverstellungen reißt. Durch die Anordnung in der Mitte wird diese Gefahr deutlich verringert. Ein kleiner Riss im Inneren ist zudem weitgehend unkritisch, da die Ränder des Risses nahe beieinander bleiben und allenfalls eine kleine, überwindbare Lücke mit schlechterer Wärmeleitfähigkeit entsteht. Eine außen aufgebrachte Folie hingegen könnte ganz abreißen.

Der Sensor weist bevorzugt eine Steuer- und Auswertungseinheit auf, die dafür ausgebildet ist, aus mit dem Lichtempfänger aufgenommenen Bilddaten eine Codeinformation eines aufgenommenen Codes auszulesen. Der Sensor wird dadurch zu einem Codeleser. Sofern der Lichtempfänger ein Bildsensor ist, handelt es sich um einen kamerabasierten Codeleser. Aufgrund der erfindungsgemäßen Fokusverstellung werden scharfe Bilder über eine lange Lebensdauer mit unzähligen Lese- und damit Fokuszyklen aufgenommen und so die Voraussetzungen für eine hohe Leserate geschaffen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine Blockdarstellung eines als Kamera ausgebildeten optoelektronischen Sensors;

Fig. 2    eine dreidimensionale Darstellung einer Fokusverstellung eines optoelektronischen Sensors durch Bewegen des Lichtempfängers in einer Parallelführung;

Fig. 3    eine dreidimensionale Darstellung einer Aktorik zum Bewegen des Lichtempfängers gemäß Figur 2;

Fig. 4    eine schematische Seitenansicht der Fokusverstellung gemäß Figur 2 in einer Grundstellung;

Fig. 5    eine schematische Seitenansicht gemäß Figur 4 in einer parallelverschobenen Stellung;

Fig. 6     eine dreidimensionale Ansicht einer Blattfeder, die in der Fokusverstellung gemäß Figur 2 eingesetzt werden kann;

Fig. 7     eine schematische, ausschnittsweise Schnittansicht der nun gelagerten Blattfeder gemäß Figur 6 mit einer Doppelausführung mit innerer Wärmeleitschicht;

Fig. 8a-b   Skizzen zur Veranschaulichung der wirkenden Kräfte bei Verbiegung der Blattfeder gemäß Figur 7 und der Vorteile der Anordnung der inneren Wärmeleitschicht in der Lage der neutralen Faser;

Fig. 9     eine Tabelle zum Vergleich der Wärmepfade in verschiedenen Ausführungsformen der Fokusverstellung; und

Fig. 10    eine schematische dreidimensionale Darstellung der beispielhaften Anwendung eines erfindungsgemäßen optoelektronischen Sensors über einem Förderband.

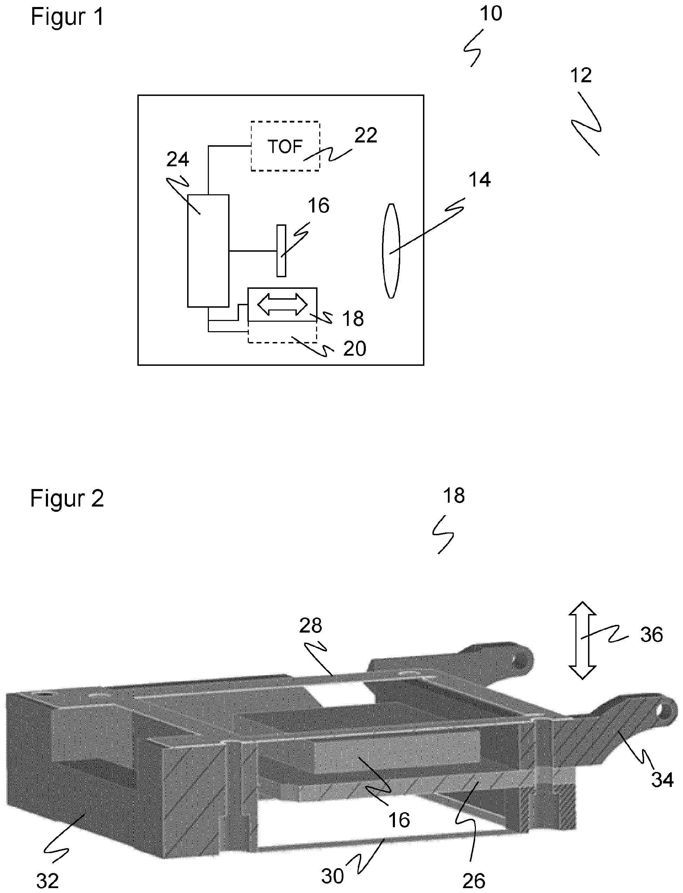

Figur 1 zeigt eine Blockdarstellung einer Kamera als Beispiel eines optoelektronischen Sensors 10 mit Fokusverstellung. Die Kamera kann als 2D-Kamera oder 3D-Kamera ausgebildet sein. Empfangslicht aus einem Erfassungsbereich 12 trifft auf eine Empfangsoptik 14, die das Empfangslicht auf einen Lichtempfänger 16 führt. Die Empfangsoptik 14 ist hier rein schematisch als einzelne Linse dargestellt. Allgemein handelt es sich um ein beliebiges Objektiv aus Linsen und anderen optischen Elementen wie Blenden, Prismen und dergleichen, und nur in einfachsten Ausführungsformen um eine Einzellinse. Im Falle einer Kamera ist der Lichtempfänger 16 ein Bildsensor mit einer Vielzahl von Lichtempfangselementen in einer Zeilen- oder Matrixanordnung. Andere Sensoren 10 verwenden eine Photodiode, eine APD (Avalanche Photodiode) oder auch einen SPAD-Empfänger (Single-Photon Avalanche Diode).

Um den Sensor 10 zu fokussieren, kann der Lichtempfänger 16 längs der optischen Achse der Empfangsoptik 14 bewegt werden. Das variiert die Bildschnittweite und bewirkt damit eine Änderung der Fokuslage. Für solche Umfokussierungen ist eine Fokusverstellung 18 zuständig, die in Figur 1 rein symbolisch dargestellt ist und die im Anschluss unter Bezugnahme auf die Figuren 2-9 genauer erläutert wird. Indem der Lichtempfänger 16 bewegt wird, statt wie sonst üblich die Empfangsoptik 14, ist dieselbe Fokusverstellung 18 in der Lage, mit unterschiedlichsten Objektiven zusammenzuwirken. Dadurch kann jeweils anwendungsbezogen das Objektiv mit den gewünschten optischen Eigenschaften als Empfangsoptik 14 verwendet werden, Masse und Größe spielen für die Fokusverstellung 18 keine Rolle.

Ein optionaler und daher gestrichelt eingezeichneter Positionssensor 20 gibt eine Rückmeldung über die aktuell eingestellte Fokuslage. Der Positionssensor 20 kann beispielsweise als rotatorischer Hallencoder auf einer Motorwelle eines Motors ausgeführt sein, der die Bewegung des Lichtempfängers 16 antreibt, oder alternativ ein linearer Hallencoder für die direkte Positionsbestimmung des Lichtempfängers 16 oder eines mit dem Lichtempfänger 16 bewegten Bauteils. Ein zusätzliches Sensorelement und insbesondere Hallelement kann ergänzend die jeweiligen maximalen Auslenkungen erkennen.

Weiterhin kann optional und daher gestrichelt eingezeichnet ein Abstandssensor 22 vorgesehen sein, der jeweils den Abstand zu einem zu erfassenden Objekt und damit die erforderliche Fokuslage bestimmt. Der Abstandssensor 22 ist mit TOF für ein bevorzugtes Lichtlaufzeitverfahren (TOF, Time of Flight) als Abstandsmessverfahren bezeichnet. Alternativ ist jede an sich bekannte Abstandsmessung möglich.

Eine Steuer- und Auswertungseinheit 24 ist mit dem Lichtempfänger 16, der Fokusverstellung 18 und, soweit vorhanden, dem Positionssensor 20 und dem Abstandssensor 22 verbunden. Ein Empfangssignal des Lichtempfängers 16 wird von der Steuer- und Auswertungseinheit 24 ausgelesen und beispielsweise als Bild gespeichert, aufbereitet und mit Bildauswertungsverfahren bearbeitet oder in einem kamerabasierten Codeleser auf Codebereiche untersucht, die dann decodiert werden. Über die Fokusverstellung 18 wird eine jeweils benötigte Fokuslage eingestellt. Die Information über die benötigte Fokuslage liefert der Abstandssensor 22. Mit der Rückmeldung des Positionssensors 20 über die tatsächliche Fokuslage kann ein Regelkreis beziehungsweise Autofokus realisiert werden.

Figur 2 zeigt eine dreidimensionale Darstellung einer Ausführungsform der Fokusverstellung 18. Der Lichtempfänger 16 ist auf einer Leiterplatte 26 untergebracht, die ihrerseits zwischen einer oberhalb angeordneten ersten Blattfeder 28 und einer unterhalb angeordneten zweiten Blattfeder 30 positioniert ist. Die beiden Blattfedern 28, 30 weisen jeweils eine rechteckige Gestalt auf, die in einer Draufsicht den Lichtempfänger 16 einrahmt. Sie sind auf der einen Seite, insbesondere einer Schmalseite des Rechtecks, in einem feststehenden Lager 32 und auf der anderen Seite in einem beweglichen Lager 34 gelagert. Das bewegliche Lager 34 wird zur Fokusverstellung durch eine Aktorik in Richtung des Pfeils 36 auf und ab bewegt.

Die Leiterplatte 26 ist ebenfalls an ihrer einen Seite in dem beweglichen Lager 34 gelagert und vollzieht deshalb die Auf- und Abbewegung mit. Sie wird dabei parallelverschoben, behält also ihre Orientierung in ihrer Empfangsebene sowie ihre laterale Position innerhalb der Empfangsebene bei. Auf der gegenüberliegenden Seite ist die Leiterplatte 26 über einen flexiblen Leiterplattenbereich oder gar nicht mit dem feststehenden Lager 32 verbunden, um eine Relativbewegung zu dem feststehenden Lager 32 und damit die Parallelverschiebung zuzulassen. Der flexible Leiterplattenbereich sorgt für die elektronische Anbindung der Leiterplatte 26. Alternativ oder zusätzlich kann eine flexible elektronische Anbindung an einer anderen Stelle erfolgen, insbesondere jenseits des beweglichen Lagers 34 mit einem flexiblen Leiterplattenbereich. Die dargestellte Parallelführung mittels zweier Blattfedern 28, 30 ist besonders vorteilhaft, dennoch sind andere Konzepte denkbar, etwa eine Auf- und Abbewegung zwischen Passstiften und Lagerbuchsen mit Federn.

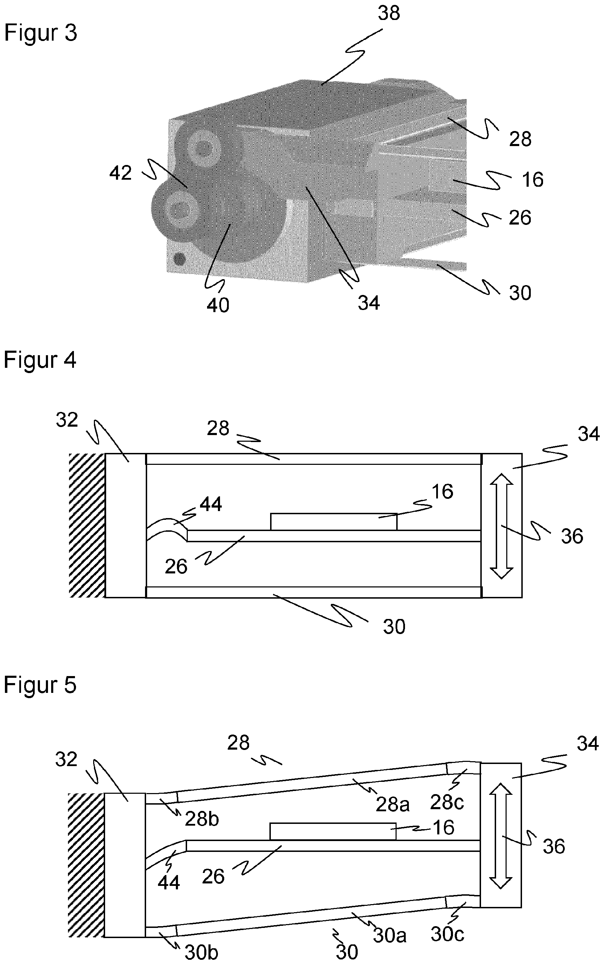

Figur 3 zeigt eine dreidimensionale Darstellung einer Aktorik für die Auf- und Abbewegung des beweglichen Lagers 34 und damit des Lichtempfängers 16. An einem Schrittmotor 38 ist als Exzenter zur Wandlung der Drehbewegung in eine Linearbewegung an dessen Welle 40 ein kugelgelagertes Pleuel 42 angeordnet, das die erforderliche Hubbewegung erzeugt. Die Anlenkung ist vorzugsweise beidseitig rechts und links des beweglichen Lagers 34 ausgeführt, um die Leiterplatte 26 gleichmäßig zu heben und zu senken. Prinzipiell wäre auch nur ein Angriffspunkt denkbar, was aber die Gefahr birgt, dass sich trotz der Blattfederparallelogramme der Lichtempfänger 16 um zumindest wenige Mikrometer verkippt und sich so das Bildfeld verschiebt. Diese Gefahr wird durch einen mittigen Angriffspunkt gemildert oder beseitigt, der zumindest bei kleinen Bauformen denkbar ist und das Design vereinfacht.

Anstelle des Schrittmotors 38 ist eine Tauchspulaktorik (Voice Coil) denkbar. Diese Aktorik kann außerhalb, aber auch innerhalb des durch die Blattfedern 28, 30 gebildeten Rahmens angeordnet werden. Beide Ausführungsformen mit Spule auf dem feststehenden und Magnet auf dem bewegten Teil und umgekehrt sind möglich. Der jeweilige mitbewegte Anteil, Spule oder Magnet, kann mit dem Lichtempfänger 16 auf der Leiterplatte 26 integriert werden. Für Anwendungen, in denen Präzision eher im Vordergrund steht als Geschwindigkeit, kann als weitere Alternative ein Piezoaktor eingesetzt werden.

Die Figuren 4 und 5 illustrieren die Parallelführung oder Parallelverschiebung des Lichtempfängers 16 durch die Fokusverstellung 18 nochmals in einer schematischen Seitenansicht, wobei Figur 4 eine Grundstellung und Figur 5 eine dagegen parallelverschobene Stellung des Lichtempfängers 16 zeigt. Die Leiterplatte 26 ist in dem beweglichen Lager 34 gelagert und vollzieht daher dessen Bewegung mit. In der gezeigten Ausführungsform ist die Leiterplatte 26 eine Flexplatine und auf der gegenüberliegenden Seite durch einen flexiblen Teilbereich 44 mit dem feststehenden Lager 32 verbunden. Dadurch kann die Leiterplatte 26 mitbewegt werden, ohne ihre Orientierung zu ändern oder sich als Ganzes zu verbiegen. Alternativ könnte die Leiterplatte 26 auf dieser Seite ganz unverbunden bleiben. Dann ist eine elektronische Kontaktierung an anderer Stelle erforderlich, vorzugsweise über einen flexiblen Teilbereich beispielsweise jenseits des beweglichen Lagers 34.

Es ist wichtig, dass die Leiterplatte 26 beziehungsweise deren flexibler Teilbereich 44 in der Lage ist, eine sehr hohe Anzahl von Fokusverstellzyklen auszuhalten. Dafür ist ein hochflexibles Design der Leiterplatte 26 von Vorteil. Eine Möglichkeit, die erforderliche Dauerfestigkeit der Flexplatine zu erreichen, ist die Verwendung von gewalztem RA Kupfer.

Die Blattfedern 28, 30 biegen sich vorzugsweise nicht über ihre ganze Länge, sondern weisen einen starren Bereich 28a, 30a sowie zwei Biegebereiche 28b-c, 30b-c im Übergang zu den Lagern 32, 34 auf. Die vertikale Auslenkung in Figur 5 kann bereits übertrieben sein, für eine Fokusverstellung über einen relativ kleinen Abstandsbereich wie beim Codelesen genügen bereits geringfügige Bewegungen des Lichtempfängers 16. Eine Parallelführung mittels Blattfedern 28, 30 ist eine bevorzugte Ausführungsform. Es sind aber auch Alternativen möglich, beispielsweise können die starren Bereiche 28a, 30a als starre Bauteile mit eigenen Federn oder Passstiften in gefederten Buchsen der Lager 32, 34, als Biegebereiche 28b-c, 30b-c ausgeführt sein.

Im Betrieb muss der Wärmetransport von dem Lichtempfänger 16 zum Gehäuse des Sensors 10 und damit nach außen gewährleistet sein. Die erforderlichen Wärmebrücken können durch den flexiblen Teilbereich 44 und die Parallelführung beziehungsweise die Blattfedern 28, 30 gebildet werden. Natürliche Konvektion und Strahlung spielen in der Regel nur eine untergeordnete Rolle, die allenfalls zur Optimierung beitragen können.

Allerdings ist der Wärmefluss durch die Blattfedern 28, 30 stark eingeschränkt. Für den thermischen Widerstand $R_{th}$ gilt $R_{th} = \frac{l}{\lambda A}$, mit Länge $l$ des Wärmepfades, $A$ dessen Querschnitt und Wärmeleitkoeffizienten $\lambda$. In den Blattfedern 28, 30 ergibt sich die ungünstige Konfiguration eines langen Wärmeleitpfades geringen Querschnitts und Wärmeleitkoeffizienten. Federstahl beispielsweise als mechanisch für zahlreiche Bewegungszyklen geeignetes Material hat einen Wärmeleitkoeffizienten von nur 15W/(m*K). Bei eine Verlustleistung von beispielsweise 1,5 W und zwei Blattfedern 28, 30 von 25 mm Länge ergibt sich ein ΔT von 1200K, d.h. es kann effektiv keine Wärme abgeführt werden. Die Parameter sind aber zunächst nicht variabel, insbesondere führt eine Vergrößerung des Querschnitts zu höheren Kräften und frühzeitigem Bruch.

Ein gewisser Fortschritt lässt sich durch Materialoptimierung erzielen. So verbessert eine Kupfer-Beryllium-Legierung den Wärmeleitkoeffizienten um einen Faktor zehn. Ein Δt von 120K ist aber weiterhin deutlich zu hoch. Somit muss doch an den geometrischen Größen Länge und Querschnitt des Wärmepfades angesetzt werden. Dafür werden nun zwei mögliche Verbesserungen vorgestellt, die auch miteinander kombiniert werden können.

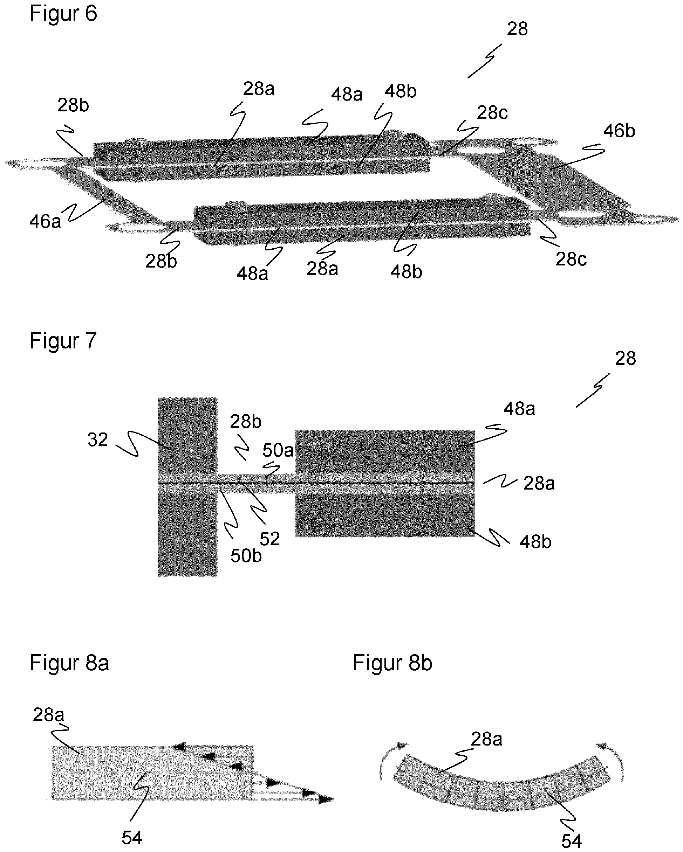

Figur 6 zeigt eine dreidimensionale Ansicht der Blattfeder 28 in einer Ausführungsform mit der ersten Verbesserung der Wärmeleitfähigkeit. Die Blattfeder 28 steht stellvertretend für beide Blattfedern 28, 30, wobei prinzipiell denkbar wäre, die Wärmeleitung nicht wie vorzugsweise in beiden Blattfedern 28, 30, sondern nur in einer Blattfeder 28, 30 zu verbessern. Die Wärmeleitung an den Schmalseiten 46a, 46b ist nicht von Belang, hier ist die Blattfeder 28 ohnehin flächig an das jeweilige Lager 32, 34 angebunden. In den Biegebereichen 28b-c sollten Querschnitt und Beweglichkeit möglichst nicht verändert werden. In den starren Bereichen 28a hingegen wird das Material aufgedickt. Um die Herstellung der Blattfeder 28 nicht zu verkomplizieren, werden dazu vorzugsweise zusätzliche Materialstreifen 48a, 48b angebracht, beispielsweise Aluminiumstreifen, und dies wiederum einseitig oder vorzugsweise beidseitig wie dargestellt. Dies kann in Einzelteilen oder auch als untrennbarer Verbund realisiert werden. Damit wird die ursprüngliche Gesamtlänge des Wärmepfades mit einem sehr dünnen Querschnitt über die ganze Länge der Blattfeder 28 hinweg drastisch reduziert auf lediglich noch die Länge der Biegebereiche 28b-c. Im obigen Zahlenbeispiel werden dadurch aus den ursprünglichen 25 mm beispielsweise nur noch 2 mm. Die zusätzliche Möglichkeit, hoch wärmeleitfähige Materialien einzusetzen, besteht weiterhin.

Figur 7 zeigt ausschnittsweise nochmals die Blattfeder 28, wiederum stellvertretend für beide Blattfedern 28, 30, in einer die zweite mögliche Verbesserung der Wärmeleitfähigkeit illustrierenden Schnittansicht. Diese zweite Verbesserung betrifft nun die Biegebereiche 28b-c und nicht die starren Bereiche 28a, die je nach Ausführungsform wie zu Figur 6 erläutert und in Figur 7 so übernommen aufgedickt sein können oder nicht. Stellvertretend gezeigt ist nur ein Biegebereich 28b.

Wie mehrfach erwähnt, würde sich eine Querschnittsvergrößerung im Biegebereich 28b negativ auf die Biegekräfte und die Lebensdauer auswirken. Es wird vielmehr die Blattfeder 28 zumindest im Biegebereich 28b, vorzugsweise überall, als Verbund einer doppelten Feder 50a-b mit einem hoch wärmeleitfähigen Kern beziehungsweise einer inneren Wärmeleitschicht 52 ausgestaltet. Die Wärmeleitschicht 52 wird vorzugsweise von einer sehr dünnen Graphitfolie gebildet, wo in einem Zahlenbeispiel mit einem Wärmeleitkoeffizienten von 1600W/(m*K) schon eine Dicke von 0,025 mm ausreichen kann.

Die Figuren 8a-b veranschaulichen in zwei Skizzen in ausgestrecktem und gebogenem Zustand die im Biegebereich 28a wirkenden Kräfte. Die mittige neutrale Faser 54 ist den geringsten Kräften ausgesetzt, darüber und darunter wirken zusätzlicher Druck und Zug. Somit wirkt hier eine minimale Dehnung. In der Literatur wird für eine beispielhafte Graphitfolie bei einem Biegeradius von 5 mm und Biegewinkel von 90° eine Zyklenzahl von 100.000 angegeben. Da für eine erfindungsgemäße Fokusverstellung lediglich Biegewinkel im Bereich von wenigen Grad erforderlich sind und auch ein höherer Biegeradius möglich ist, erhöht sich die Zyklenzahl nochmals deutlich.

Wird hingegen eine Graphitfolie außerhalb der neutralen Faser 54 oder gar einfach außen angeordnet, so wird die Dehnung rasch zu hoch, und die Graphitfolie reißt ab. Sollte es hingegen in der neutralen Faser 54 dazu kommen, dass die Graphitfolie überbeansprucht wird, dann bildet hier ein etwaiger Riss nur einen minimalen Spalt, der zudem oben und unten durch das Material der doppelten Feder 50a-b überbrückt wird.

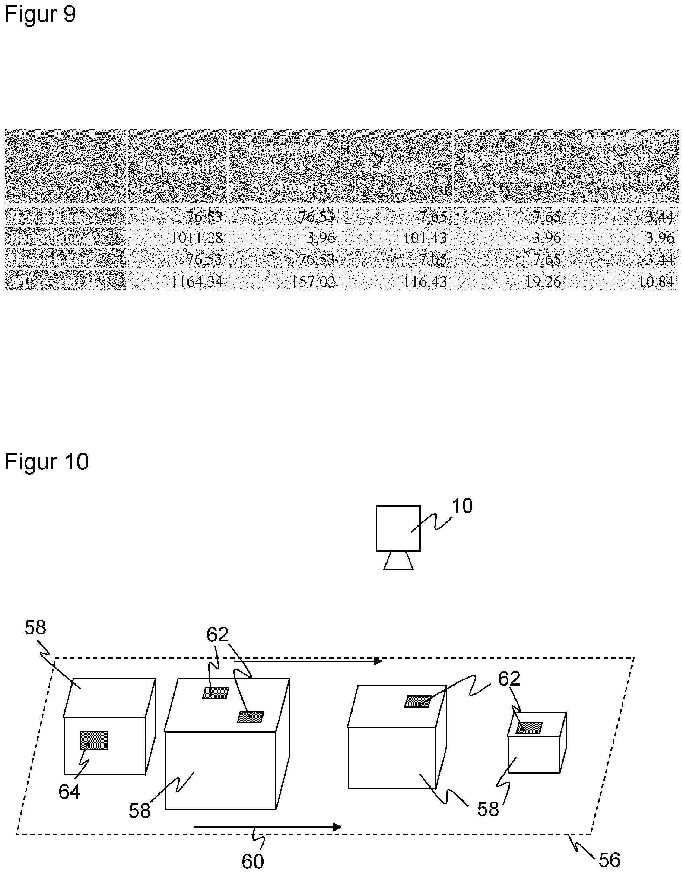

Figur 9 zeigte eine Tabelle zum Vergleich der Wärmepfade in verschiedenen Ausgestaltungen der Fokusverstellung. Die Abschätzung beschränkt sich auf die Wärmeleitung und berücksichtig nicht weitere Effekte wie Konvektion und Strahlung. Den beispielhaften Berechnungen liegt jeweils der günstigste Wärmepfad ohne Parallelpfade, eine abzuführende Verlustleistung von 1,5 W, eine Pfadlänge von 25 mm bei 2 mm Länge der Biegebereiche und eine Federdicke von 0,1 mm zugrunde. In den Zeilen sind als "Bereich kurz" die beiden Biegebereiche 28b-c, 30b-c und als "Bereich lang" der starre Bereich 28a, 30a berücksichtigt, die letzte Zeile zeigt das summierte ΔT. Die erste Spalte entspricht einer einfachen Ausführung in Federstahl ohne Wärmeoptimierungen, hier wird mit ΔT=1164 praktisch keine Wärme abgeführt. In der zweiten Spalte wird ein Verbund mit Aluminium als Materialstreifen 48a, 48b in dem starren Bereich 28b, 30b gemäß Figur 6 eingesetzt. Das reduziert den Beitrag des starren Bereichs 28b, 30b immens, insgesamt bleibt aber ΔT=157 noch zu hoch. Die dritte Spalte entspricht wiederum der einfachen Ausführungsform der ersten Spalte, nun aber mit einer hoch wärmeleitfähigen Beryllium-Kupfer-Legierung, die alle Beiträge um einen Faktor zehn verbessert, der insgesamt bei ΔT=116 ebenfalls nicht ausreicht. Die vierte Spalte kombiniert die Maßnahmen der zweiten und dritten Spalte und erreicht damit bereits DT=19. In der fünften Spalte werden beide zu Figur 6 und 7 vorgestellten Maßnahmen umgesetzt, d.h. die starren Bereiche 28b, 30b werden mit Aluminium als Materialstreifen 48a, 48b verdickt und zumindest die Biegebereiche 28b-c, 30b-c oder die gesamten Blattfedern 28, 30 als doppelte Federn 50a-b mit einer durch eine Graphitfolie gebildeten Wärmeleitschicht 52 ausgeführt. Das verbessert nochmals um einen Faktor zwei auf ΔT=11, wobei nicht einmal eine an sich noch mögliche Beryllium-Kupfer-Legierung vorausgesetzt wurde.

Figur 10 zeigt abschließend eine mögliche Anwendung des Sensors 10 in Montage an einem Förderband 56, welches Objekte 58, wie durch den Pfeil 60 angedeutet, durch den Erfassungsbereich 12 des Sensors 10 fördert. Die Objekte 58 können an ihren Außenflächen Codebereiche 62 tragen. Aufgabe des Sensors 10 ist, Eigenschaften der Objekte 58 zu erfassen und in einem bevorzugten Einsatz als Codeleser die Codebereiche 62 zu erkennen, die dort angebrachten Codes auszulesen, zu dekodieren und dem jeweils zugehörigen Objekt 58 zuzuordnen. Um auch seitlich angebrachte Codebereiche 64 zu erkennen, werden vorzugsweise zusätzliche, nicht dargestellte Sensoren 10 aus unterschiedlicher Perspektive eingesetzt.

**Patentansprüche**

1. Optoelektronischer Sensor (10), der einen Lichtempfänger (16), eine dem Lichtempfänger (16) vorgeordnete Empfangsoptik (14) und eine Fokusverstelleinheit (18) mit einem Aktor (38) aufweist, die dafür ausgebildet ist, den Lichtempfänger (16) zu bewegen, wobei die Fokusverstelleinheit (18) eine Parallelführung mit mindestens einem flexiblen Halteelement (28, 30) aufweist, die den Lichtempfänger (16) in gleichbleibender Orientierung auf der optischen Achse der Empfangsoptik (14) bewegt, und wobei das mindestens eine flexible Halteelement (28, 30) eine zusätzliche Wärmeleitschicht (52) aufweist,
**dadurch gekennzeichnet,**
**dass** das mindestens eine flexible Halteelement (28, 30) zwei Metallschichten (50a, 50b) mit der Wärmeleitschicht (52) dazwischen aufweist und/oder dass die Wärmeleitschicht (52) als Graphitfolie ausgebildet ist.

2. Sensor (10) nach Anspruch 1,
wobei der Aktor (38) einen Schrittmotor oder eine Tauchspule aufweist und/oder wobei der Sensor (10) einen Positionssensor (20) zur Bestimmung der Position des Aktors (38), der Parallelführung oder des Lichtempfängers (16) aufweist.

3. Sensor (10) nach Anspruch 1 oder 2,
wobei der Lichtempfänger (16) auf einer Leiterplatte (26) angeordnet ist, die mindestens einen flexiblen Teilbereich (44) aufweist.

4. Sensor (10) nach Anspruch 3,
wobei die Leiterplatte (26) zumindest in dem flexiblen Teilbereich (44) gewalztes Kupfer aufweist.

5. Sensor (10) nach einem der vorhergehenden Ansprüche,
wobei die Parallelführung eine feststehende erste Lagerung (32) und eine gegenüberliegende bewegliche zweite Lagerung (34) aufweist, und wobei das flexible Halteelement (28, 30) mit einer ersten Seite (46a) in der ersten Lagerung (32) und mit einer gegenüberliegenden zweiten (46b) Seite in der zweiten Lagerung (34) gelagert ist.

6. Sensor (10) nach Anspruch 5,
wobei der Lichtempfänger (16) mindestens mittelbar starr mit der zweiten Lagerung (34) und flexibel oder gar nicht mit der ersten Lagerung (32) verbunden ist.

7. Sensor (10) nach einem der vorhergehenden Ansprüche,
wobei das mindestens eine flexible Halteelement (28, 30) als Rahmen um den Lichtempfänger (16) ausgebildet ist.

8. Sensor (10) nach einem der vorhergehenden Ansprüche,
wobei das mindestens eine flexible Halteelement (28, 30) mindestens eine Blattfeder aufweist.

9. Sensor (10) nach einem der vorhergehenden Ansprüche,
wobei die Parallelführung zwei flexible Halteelemente (28, 30) aufweist, und wobei der Lichtempfänger (16) zwischen den beiden flexiblen Halteelementen (28, 30) angeordnet ist.

10. Sensor (10) nach einem der vorhergehenden Ansprüche,
wobei das mindestens eine flexible Halteelement (28, 30) ein wärmeleitfähiges Metall aufweist, insbesondere Kupfer oder eine Kupfer-Beryllium-Legierung.

11. Sensor (10) nach einem der vorhergehenden Ansprüche,
wobei das mindestens eine flexible Halteelement (28, 30) mindestens einen starren Bereich (28a, 30a) aufweist, in dem das Material verdickt ist, insbesondere mittels mindestens eines zusätzlichen Metallstreifens (48a, 48b).

12. Sensor (10) nach einem der vorhergehenden Ansprüche,
der eine Steuer- und Auswertungseinheit (54) aufweist, die dafür ausgebildet ist, aus mit dem Lichtempfänger (16) aufgenommenen Bilddaten eine Codeinformation eines aufgenommenen Codes (60) auszulesen.

13. Verfahren zur Fokusverstellung eines optoelektronischen Sensors (10) mit einem Lichtempfänger (16) und einer dem Lichtempfänger (16) vorgeordneten Empfangsoptik (14), bei dem von einer Fokusverstelleinheit (18) der Lichtempfänger (16) mittels eines Aktors (38) bewegt wird, wobei die Fokusverstelleinheit (18) mittels einer Parallelführung mit mindestens einem flexiblen Halteelement (28, 30) den Lichtempfänger (16) in gleichbleibender Orientierung auf der optischen Achse der Empfangsoptik (14) bewegt und wobei das mindestens eine flexible Halteelement (28, 30) eine zusätzliche Wärmeleitschicht (52) aufweist, **dadurch gekennzeichnet,**
**dass** das mindestens eine flexible Halteelement (28, 30) zwei Metallschichten (50a, 50b) mit der Wärmeleitschicht (52) dazwischen aufweist und/oder dass die Wärmeleitschicht (52) als Graphitfolie ausgebildet ist.

**Claims**

1. An optoelectronic sensor (10) comprising a light receiver (16), receiving optics (14) arranged in front of the light receiver (16) and a focus adjustment unit (18) having an actuator (38) configured to move the light receiver (16), the focus adjustment unit (18) comprising a parallel guide having at least one flexible holding element (28, 30), that moves the light receiver (16) on the optical axis of the receiving optics (14) in a constant orientation, and wherein the at least one flexible holding element (28, 30) comprises an additional heat-conducting layer (52), **characterized in that** the at least one flexible holding element (28, 30) comprises two metal layers (50a, 50b) with the heat-conducting layer (52) between them and/or in that the heat-conducting layer (52) is configured as a graphite foil.

2. The sensor (10) according to claim 1, wherein the actuator (38) comprises a stepper motor or a moving coil and/or wherein the sensor (10) comprises a position sensor (20) for determining the position of the actuator (38), the parallel guide or the light receiver (16).

3. The sensor (10) according to claim 1 or 2, wherein the light receiver (16) is arranged on a printed circuit board (26) that comprises at least one flexible subregion (44).

4. The sensor (10) according to claim 3, wherein the printed circuit board (26) comprises rolled copper at least in the flexible subregion (44).

5. The sensor (10) according to any of the preceding claims, wherein the parallel guide comprises a fixed first bearing (32) and an opposite movable second bearing (34), and wherein the flexible holding element (28, 30) is mounted with a first side (46a) in the first bearing (32) and with an opposite second side (46b) in the second bearing (34).

6. The sensor (10) according to claim 5, wherein the light receiver (16) is at least indirectly rigidly connected to the second bearing (34) and flexibly or not at all connected to the first bearing (32).

7. The sensor (10) according to any of the preceding claims, wherein the at least one flexible holding element (28, 30) is configured as a frame around the light receiver (16).

8. The sensor (10) according to any of the preceding claims, wherein the at least one flexible holding element (28, 30) comprises at least one leaf spring.

9. The sensor (10) according to any of the preceding claims, wherein the parallel guide comprises two flexible holding elements (28, 30), and wherein the light receiver (16) is arranged between the two flexible holding elements (28, 30).

10. The sensor (10) according to any of the preceding claims, wherein the at least one flexible holding element (28, 30) comprises a thermally conductive metal, in particular copper or a copper-beryllium alloy.

11. The sensor (10) according to any of the preceding claims, wherein the at least one flexible holding element (28, 30) comprises at least one rigid region (28a, 30a) where the material is thickened, in particular by means of at least one additional metal strip (48a, 48b).

12. The sensor (10) according to any of the preceding claims, comprising a control and evaluation unit (54) configured to read out code information of a recorded code (60) from image data recorded with the light receiver (16).

13. A method for adjusting the focus of an optoelectronic sensor (10) having a light receiver (16) and receiving optics (14) arranged in front of the light receiver (16), wherein the light receiver (16) is moved by a focus adjustment unit (18) by means of an actuator (38), the focus adjustment unit (18) moving the light receiver (16) on the optical axis of the receiving optics (14) in a constant orientation by means of a parallel guide having at least one flexible holding element (28, 30) and wherein the at least one flexible holding element (28, 30) comprises an additional heat conducting layer (52), **characterized in that** the at least one flexible holding element (28, 30) comprises two metal layers (50a, 50b) with the heat conducting layer (52) between them and/or **in that** the heat conducting layer (52) is configured as a graphite foil.

## Revendications

1. Capteur optoélectronique (10) comprenant un récepteur de lumière (16), une optique de réception (14) disposée en amont du récepteur de lumière (16) et une unité de réglage focale (18) avec un actionneur (38) configurée pour déplacer le récepteur de lumière (16), dans lequel l'unité de réglage focale (18) comprend un guide parallèle avec au moins un élément de maintien flexible (28, 30), qui déplace le récepteur de lumière (16) dans une orientation constante sur l'axe optique de l'optique de réception (14), et dans lequel ledit au moins un élément de maintien flexible (28, 30) comprend une couche thermoconductrice supplémentaire (52),

**caractérisé en ce que**

ledit au moins un élément de maintien flexible (28, 30) comprend deux couches métalliques (50a, 50b) avec la couche thermoconductrice (52) entre elles et/ou **en ce que** la couche thermoconductrice (52) est configurée comme une feuille de graphite.

2. Capteur (10) selon la revendication 1,

   dans lequel l'actionneur (38) comprend un moteur pas à pas ou une bobine plongeuse et/ou dans lequel le capteur (10) comprend un capteur de position (20) pour déterminer la position de l'actionneur (38), du guide parallèle ou du récepteur de lumière (16).

3. Capteur (10) selon la revendication 1 ou 2, dans lequel le récepteur de lumière (16) est disposé sur une carte imprimée (26) qui comprend au moins une zone partielle flexible (44).

4. Capteur (10) selon la revendication 3, dans lequel la carte imprimée (26) comprend du cuivre laminé au moins dans la zone partielle flexible (44).

5. Capteur (10) selon l'une des revendications précédentes,
   dans lequel le guide parallèle comprend un premier palier fixe (32) et un deuxième palier mobile opposé (34), et dans lequel l'élément de maintien flexible (28, 30) est stocké avec un premier côté (46a) dans le premier palier (32) et avec un deuxième côté opposé (46b) dans le deuxième palier (34).

6. Capteur (10) selon la revendication 5, dans lequel le récepteur de lumière (16) est au moins indirectement relié de manière rigide au deuxième palier (34) et de manière flexible ou pas du tout au premier palier (32).

7. Capteur (10) selon l'une des revendications précédentes,
   dans lequel ledit au moins un élément de maintien flexible (28, 30) est configuré comme un cadre autour du récepteur de lumière (16).

8. Capteur (10) selon l'une des revendications précédentes,
   dans lequel ledit au moins un élément de maintien flexible (28, 30) comprend au moins un ressort à lames.

9. Capteur (10) selon l'une des revendications précédentes,
dans lequel le guide parallèle comprend deux éléments de maintien flexibles (28, 30), et dans lequel le récepteur de lumière (16) est disposé entre les deux éléments de maintien flexibles (28, 30).

10. Capteur (10) selon l'une des revendications précédentes,
    dans lequel ledit au moins un élément de maintien flexible (28, 30) comprend un métal thermoconducteur, en particulier du cuivre ou un alliage de cuivre et de béryllium.

11. Capteur (10) selon l'une des revendications précédentes,
    dans lequel ledit au moins un élément de maintien flexible (28, 30) comprend au moins une zone rigide (28a, 30a) dans laquelle le matériau est épaissi, en particulier au moyen d'au moins une bande métallique supplémentaire (48a, 48b).

12. Capteur (10) selon l'une des revendications précédentes,
    comprenant une unité de commande et d'évaluation (54) configurée pour lire une information de code d'un code enregistré (60) à partir des données d'image enregistrées avec le récepteur de lumière (16).

13. Procédé de réglage de focalisation d'un capteur optoélectronique (10) avec un récepteur de lumière (16) et une optique de réception (14) disposée en amont du récepteur de lumière (16), dans lequel le récepteur de lumière (16) est déplacé par une unité de réglage focale (18) au moyen d'un actionneur (38), dans lequel l'unité de réglage focale (18) déplace le récepteur de lumière (16) dans une orientation constante sur l'axe optique de l'optique de réception (14) au moyen d'un guide parallèle avec au moins un élément de maintien flexible (28, 30) et dans lequel ledit au moins un élément de maintien flexible (28, 30) comprend une couche thermoconductrice supplémentaire (52),

    **caractérisé en ce que**

    ledit au moins un élément de maintien flexible (28, 30) comprend deux couches métalliques (50a, 50b) avec la couche thermoconductrice (52) entre elles et/ou **en ce que** la couche thermoconductrice (52) est configurée comme une feuille de graphite.

Figur 1

Figur 2

Figur 3

Figur 4

Figur 5

Figur 6

Figur 7

Figur 8a

Figur 8b

## Figur 9

| Zone | Federstahl | Federstahl mit AL Verbund | B-Kupfer | B-Kupfer mit AL Verbund | Doppelfeder AL mit Graphit und AL Verbund |
|---|---|---|---|---|---|
| Bereich kurz | 76,53 | 76,53 | 7,65 | 7,65 | 3,44 |
| Bereich lang | 1011,28 | 3,96 | 101,13 | 3,96 | 3,96 |
| Bereich kurz | 76,53 | 76,53 | 7,65 | 7,65 | 3,44 |
| ΔT gesamt [K] | 1164,34 | 157,02 | 116,43 | 19,26 | 10,84 |

## Figur 10

## IN DER BESCHREIBUNG AUFGEFÜHRTE DOKUMENTE

**In der Beschreibung aufgeführte Patentdokumente**

- EP 2498113 A1
- US 20160178923 A1
- EP 757270 B1
- DE 102016112123 A1
- EP 3525026 A1
- EP 3663846 A1
- EP 1513094 B1
- EP 1698996 B1
- EP 2112540 A1

- US 7419467 B
- US 20140093228 A1
- US 5101278 A
- US 5245172 A
- US 20150070565 A1
- US 20080062301 A1
- US 5969760 A
- US 20100283887 A1
- US 20210080807 A1